# EUROPEAN PATENT SPECIFICATION

(11) **EP 3 552 910 B1**
(45) Date of publication and mention of the grant of the patent: **18.11.2026**
(21) Application number: 19167268.2
(22) Date of filing: 04.04.2019
(51) Int. Cl.: B60W 50/08, B60W 50/14, B60W 30/18, G08G 1/16, B60W 50/02, G08G 1/0962, B60W 50/00

(54) **APPARATUS AND METHOD FOR CONTROLLING LANE CHANGE IN VEHICLE**
VORRICHTUNG UND VERFAHREN ZUR STEUERUNG DES SPURWECHSELS IN EINEM FAHRZEUG
APPAREIL ET PROCÉDÉ DE COMMANDE DE CHANGEMENT DE VOIE DANS UN VÉHICULE

(30) Priority: 11.04.2018 US 201862655831 P; 20.11.2018 KR 20180143874
(43) Date of publication of application: 16.10.2019
(73) Proprietor: Hyundai Motor Company, Seoul 06797 (KR); Kia Corporation, Seocho-gu Seoul 06797 (KR)
(72) Inventor: Oh, Dong Eon, Gyeonggi-do 18280 (KR); Kim, Hoi Won, Gyeonggi-do 18280 (KR); Jeon, Jae Yong, Gyeonggi-do 18280 (KR); Kim, Beom Jun, Gyeonggi-do 18280 (KR); Kim, Dae-Young, Gyeonggi-do 18280 (KR); Park, Chan Il, Gyeonggi-do 18280 (KR); Jeong, Jin Su, Gyeonggi-do 18280 (KR); Um, Doo Jin, Gyeonggi-do 18280 (KR)
(74) Representative: Hoffmann Eitle

(56) References cited:
- WO-A1-2017/168013
- US-A1- 2012 296 522
- US-A1- 2017 240 172

## Description

### CROSS-REFERENCE TO RELATED APPLICATION

This application claims priority to and the benefit of Korean Patent Application No. 10-2018-0143874, filed on November 20, 2018, which claims priority to and the benefit of U.S. Provisional Patent Application No. 62/655,831, filed on April 11, 2018.

### FIELD

The present invention relates to an apparatus and method for controlling a lane change system in a vehicle.

### BACKGROUND

With the development of the auto industry, an autonomous system and a driving assistance system which facilitates partially autonomous driving (hereinafter, for convenience of description, both of autonomous driving and driving assistance are referred to as "autonomous driving") have been developed. The autonomous system may provide a variety of functions, for example, setting speed keeping, vehicle-to-vehicle distance keeping, lane keeping, and a lane change. The autonomous system may perform autonomous driving using various devices such as a sensor for sensing environments outside the vehicle, a sensor for sensing information about the vehicle, a global positioning system (GPS), a detailed map, a driver state monitoring system, a steering actuator, an acceleration/deceleration actuator, a communication circuit, and a control circuit (e.g., an electronic control unit (ECU)). Sensors capable of sensing other vehicles located around the vehicle may be desired to perform an automatic lane change among the above-mentioned functions.

To safely perform an automatic lane change, it may be desired for a sensor to operate normally. Particularly, it is desired for a rear sensor which senses situations behind the vehicle, which are difficult to be checked with eyes of the driver, to operate normally. The rear sensor should have a sufficient sensing range capable of providing the safety of the vehicle.

US 2017/240172 A1 relates to a travel control device. A lane change controller determines whether lane change is available or unavailable on the basis of a detection result. That is, when the availability of the lane change is determined, the lane change controller determines the presence of an obstacle, e.g. other vehicle, on the basis of a obstacle detection result of a radar, and determines whether the lane change is available or unavailable. In more detail, it is determined whether or not the obstacle is present in a predetermined area A at the rear left and rear right of the vehicle. If the obstacle is not present in the predetermined area A, lane change is available. If the obstacle is present in the predetermined, the lane change is unavailable.

WO 2017/168013 A1 relates to a method and system for lane-changing assistance for a motor vehicle. The method for lane-changing assistance for a motor vehicle from an initial driving lane to an end driving lane comprises detecting the end driving lane and guiding the vehicle so that it joins the end driving lane over a predetermined lane-changing interval. At least one parameter characteristic of the driving behavior of a driver of said motor vehicle is determined and said lane-changing interval is predetermined and fixed according to said at least one parameter.

### SUMMARY

At least some of the above objectives are achieved by providing an apparatus according to claim 1 and a method according to claim 11 for changing a state of a lane change system in consideration of whether a sensor operates normally to provide the safety of a driver.

According to a first aspect of the present invention there is provided an apparatus for controlling a lane change in a vehicle according to claim 1.

According to a further aspect, the control circuit may be configured to receive the sensing data from the sensor, when the vehicle is started.

According to a further aspect, the control circuit may be configured to switch the system for lane change to the stand-by state, when data about the object located outside the specified distance is included in the sensing data.

According to the invention, the control circuit is configured to determine whether the sensor operates normally.

According to a further aspect, the control circuit may be configured to switch the system for lane change to the stand-by state, when the object located outside the specified distance is sensed by the sensor and when the vehicle is located within a specified operation section of the system for lane change.

According to a further aspect, the control circuit may be configured to switch the system for lane change from an off state to the stand-by state, when the object located outside the specified distance is sensed by the sensor.

According to a further aspect, the control circuit may be configured to switch the system for lane change to an on state, when approval of a driver of the vehicle is received in the stand-by state.

According to a further aspect, the apparatus may further include an output device. The control circuit may be configured to output a visual indication indicating an off state, the stand-by state or an on state of the system for lane change using the output device.

According to a further aspect, the control circuit may be configured to maintain an off state of the system for lane change, when only an object located within the specified distance is sensed by the sensor.

According to a further aspect, the apparatus may further include an output device. The control circuit may be configured to output a visual indication indicating the sensing of the object using the output device, when the object located outside the specified distance is sensed by the sensor.

According to a further aspect, the apparatus may further include an output device. The control circuit may be configured to output a visual indication indicating a fault of the sensor using the output device, when only an object located within the specified distance is sensed by the sensor.

According to a second aspect of the present invention, there is provided a method for controlling a lane change in a vehicle according to claim 11.

According to a further aspect, the method may further include a step of determining whether the sensor operates normally, based on the sensing data. The method may include a step of switching the system for lane change to the stand-by state, when the sensor operates normally.

According to a further aspect, the method may include a step of switching the system for lane change to the stand-by state, when the object located outside the specified distance is sensed by the sensor and when the vehicle is located within a specified operation section of the system for lane change.

According to a further aspect, the method may further include a step of switching the system for lane change to an on state, when approval of a driver of the vehicle is received in the stand-by state.

Further areas of applicability will become apparent from the description provided herein. It should be understood that the description and specific examples are intended for purposes of illustration only and are not intended to limit the scope of the present invention, which is defined by the appended claims.

### DRAWINGS

In order that the invention may be well understood, there will be described various forms thereof, given by way of example, reference being made to the accompanying drawings, in which:
FIG. 1 is a block diagram illustrating a configuration of an apparatus for controlling a lane change in a vehicle;
FIG. 2 is a block diagram illustrating a lane change system in a vehicle;
FIG. 3 is a block diagram illustrating a state of a lane change system in an apparatus for controlling a lane change in a vehicle;
FIG. 4 illustrates an exemplary operation of an apparatus for controlling a lane change in a vehicle;
FIG. 5 illustrates an exemplary operation of an apparatus for controlling a lane change in a vehicle;
FIG. 6 illustrates an exemplary operation of an apparatus for controlling a lane change in a vehicle;
FIG. 7 is a flowchart illustrating a method for controlling a lane change in a vehicle; and
FIG. 8 is a block diagram illustrating a configuration of a computing system.

The drawings described herein are for illustration purposes only and are not intended to limit the scope of the present invention in any way.

### DETAILED DESCRIPTION

The following description is merely exemplary in nature and is not intended to limit the present invention, application, or uses. It should be understood that throughout the drawings, corresponding reference numerals indicate like or corresponding parts and features.

In describing elements of forms of the present invention, the terms 1^{st}, 2^{nd}, first, second, A, B, (a), (b), and the like may be used herein. These terms are only used to distinguish one element from another element, but do not limit the corresponding elements irrespective of the nature, turn, or order of the corresponding elements. Unless otherwise defined, all terms used herein, including technical or scientific terms, have the same meanings as those generally understood by those skilled in the art to which the present invention pertains. Such terms as those defined in a generally used dictionary are to be interpreted as having meanings equal to the contextual meanings in the relevant field of art, and are not to be interpreted as having ideal or excessively formal meanings unless clearly defined as having such in the present application.

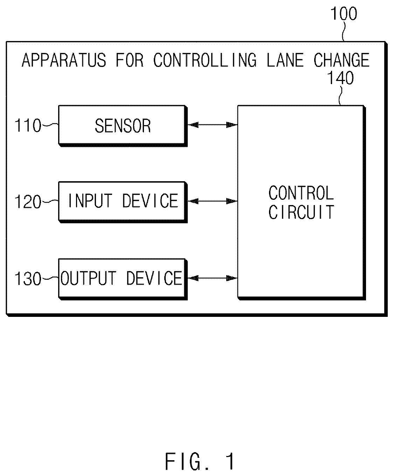

FIG. 1 is a block diagram illustrating a configuration of an apparatus for controlling a lane change in a vehicle according to a form of the present invention.

Referring to FIG. 1, an apparatus 100 for controlling a lane change in a vehicle may include a sensor 110, an input device 120, an output device 130, and a control circuit 140. The apparatus 100 for controlling the lane change in FIG. 1 may be a portion of an autonomous system and may be loaded into the vehicle.

The sensor 110 is configured to sense information about the outside of the vehicle. Particularly, the sensor 110 may be a rear sensor configured to sense an object located behind the vehicle. To provide the safety of a lane change, a sensing range of the sensor 110, which is greater than or equal to a specified distance (e.g., about 55 m) backward from the vehicle, may be desired.

The input device 120 may be configured to receive an input from a driver of the vehicle. The input device 120 may be configured to receive, for example, an instruction to enable a lane change system from the driver. The input device 120 may include a switch, a lever, a button, or the like.

The output device 130 may be configured to output information visually sensible by the driver. The output device 130 may include, for example, a display, a lamp, and/or the like.

The control circuit 140 is electrically connected with the sensor 110, the input device 120, and the output device 130. The control circuit 140 may control the sensor 110, the input device 120, and the output device 130 and may perform a variety of data processing and various arithmetic operations. The control circuit 140 may be, for example, an electronic control unit (ECU), a micro controller unit (MCU), or a sub-controller, which is loaded into the vehicle.

As shown in FIG. 1, the control circuit 140 may receive sensing data from the sensor 110. For example, when the vehicle is started, the control circuit 140 may receive sensing data from the sensor 110. When an idle stop and go (ISG) system is operated, the control circuit 140 may determine that the vehicle is started.

Furthermore, the control circuit 140 may determine whether the sensor 110 operates normally, based on the sensing data. When an object located outside a specified distance backward from the vehicle is sensed by the sensor 110, the control circuit 140 determines that the sensor 110 operates normally. For another example, when data for an object located outside the specified distance is included in the sensing data, the control circuit 140 may determine that the sensor 110 operates normally.

When the sensor 110 operates normally, the control circuit 140 switches a system for lane change in the vehicle to a stand-by state. For example, when the object located outside the specified distance backward from the vehicle is sensed by the sensor 110, the control circuit 140 may switch the system for lane change to the stand-by state. The control circuit 140 may switch the system for lane change from an off state to the stand-by state.

When the object located outside the specified distance is sensed by the sensor 110 and when the vehicle is located within a specified operation section of the system for lane change, the control circuit 140 may switch the system for lane change to the stand-by state. The specified operation section may be, for example, a limited-access road. When the vehicle is located within the operation section of the system for lane change and when the sensor 110 operates normally, the control circuit 140 may switch the system for lane change to the stand-by state.

When approval of a driver of the vehicle is received in the stand-by state, the control circuit 140 may switch the system for lane change to an on state. For example, when the approval of the driver is received via the input device 120, the control circuit 140 may enable the system for lane change. When the system for lane change is enabled, the control circuit 140 may perform automatic lane change control depending on an input of the driver.

When only an object located within the specified distance is sensed by the sensor 110, the control circuit 140 maintains the off state of the system for lane change. When the sensor 110 does not sense an object located outside the specified distance, since a normal operation of the sensor 110 is not provided, the vehicle may maintain the system for lane change in the off state.

Accordingly, the control circuit 140 may output a user interface for a state of the sensor 110 and a state of the system for lane change using the output device 130.

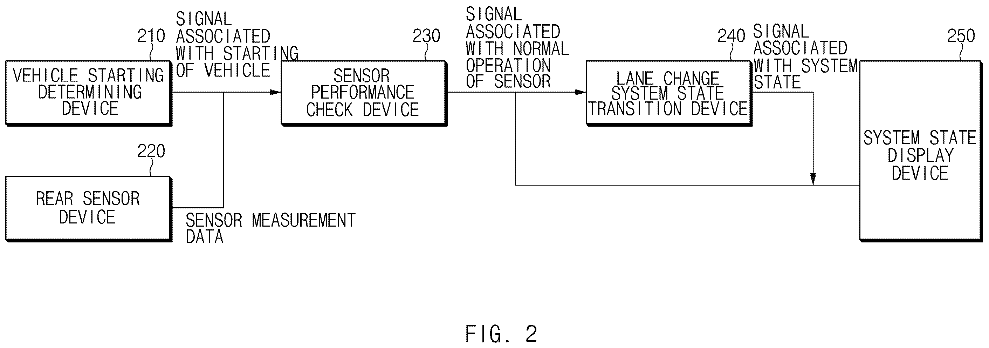

FIG. 2 is a block diagram illustrating a lane change system in a vehicle according to a form of the present invention.

Referring to FIG. 2, the system according to an exemplary form of the present invention may include a vehicle starting determining device 210, a rear sensor device 220, a sensor performance check device 230, and a lane change system state transition device 240, and a system state display device 250. The system may be loaded into the vehicle.

The vehicle starting determining device 210 may detect starting of the vehicle. When a vehicle system changes from an off state to an on state and is kept in the on state, the vehicle starting determining device 210 may determine that the vehicle is started. While an ISG system is operated, the vehicle starting determining device 210 may determine that the vehicle is started. The vehicle starting determining device 210 may determine whether the vehicle is started and may provide the result to the sensor performance check device 230.

The rear sensor device 220 may measure a relative distance, a relative speed, relative acceleration, and the like between the vehicle and an object around the vehicle and may provide the measured data to the sensor performance check device 230.

The sensor performance check device 230 may check whether a sensor operates normally, based on the information received from the vehicle starting determining device 210 and the rear sensor device 220. While sensing data is received in the state where the vehicle is started, when surrounding objects are recognized one or more times outside the specified distance backward from the vehicle, the sensor performance check device 230 may determine that the sensor operates normally until the vehicle system is turned off and may provide related information to the lane change system state transition device 240.

The lane change system state transition device 240 may set a state of the lane change system to an off state, a stand-by state, or an on state. When the normal operation of the sensor is recognized from the sensor performance check device 230, the lane change system state transition device 240 may switch the lane change system from the off state to the standby-state. The lane change system state transition device 240 may deliver information about a state of the sensor and a state of the lane change system to the system state display device 250.

The system state display device 250 may visually display the state of the sensor and the state of the lane change system to the driver based on the information received from the lane change system state transition device 240. For example, the system state display device 250 may visually display whether the sensor operates normally. For another example, the system state display device 250 may visually display the off state, the stand-by state, and the on state of the lane change system.

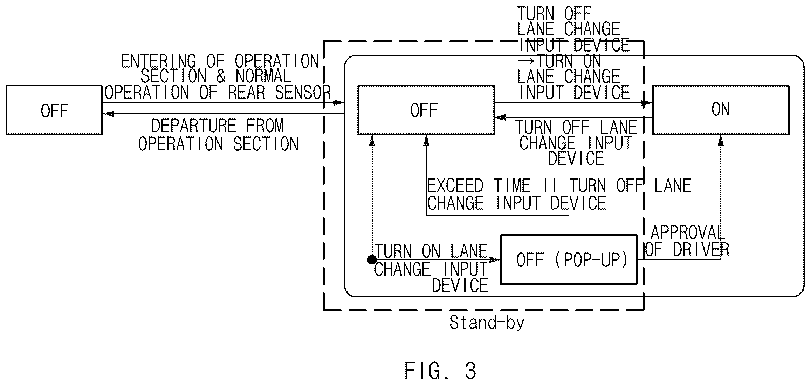

FIG. 3 is a block diagram illustrating a state of a lane change system in an apparatus for controlling a lane change in a vehicle according to an exemplary form of the present invention.

Referring to FIG. 3, the lane change system may be in an off state. When a vehicle enters an operation section of the lane change system and a normal operation of a rear sensor is recognized, the lane change system may switch from the off state to a stand-by state. When the vehicle departs from the operation section, the lane change system may switch from the stand-by state to the off state.

When a driver of the vehicle turns on a lane change input device in the stand-by state, the lane change system may switch from the stand-by state to an on state. The lane change system may provide a pop-up for receiving approval of the driver. When the approval of the driver is received through the pop-up, the lane change system may switch from the stand-by state to the on state. When the driver turns off the lane change input device, the lane change system may switch from the on state to the stand-by state or may maintain the stand-by state.

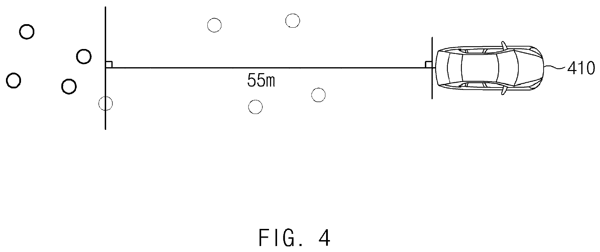

FIG. 4 illustrates an exemplary operation of an apparatus for controlling a lane change in a vehicle according to a form of the present invention.

Referring to FIG. 4, a vehicle 410 may detect objects located behind the vehicle 410 using a rear sensor. For example, when only objects within a specified distance of 55 m backward from the vehicle 410 are sensed by the rear sensor, the vehicle 410 may determine that the sensor does not operate normally and may maintain a lane change system in an off state.

When objects outside the specified distance backward from the vehicle 410 are sensed by the rear sensor, the vehicle 410 determines that the sensor operates normally and switches the lane change system to a stand-by state. When the objects outside the specified distance are sensed once, the vehicle 410 may determine that the sensor operates normally. Although the objects outside the specified distance disappear thereafter, because the normal operation of the sensor is already verified, the vehicle 410 may determine that the sensor operates normally until the vehicle 410 is turned off.

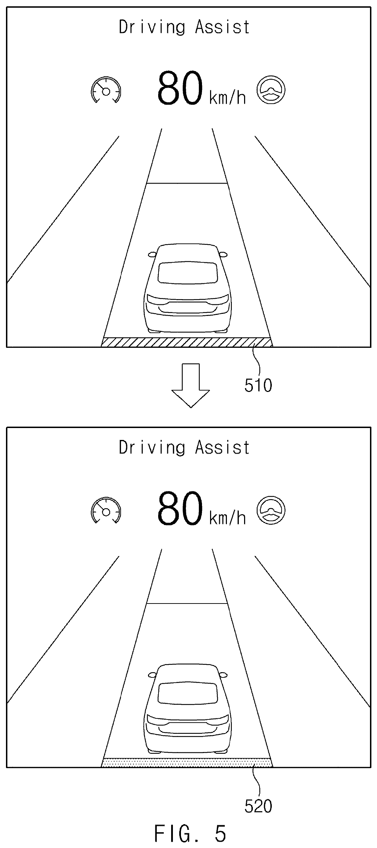

FIG. 5 illustrates an exemplary operation of an apparatus for controlling a lane change in a vehicle according to a form of the present invention.

When only an object located within a specified distance is sensed by a sensor of the vehicle, the vehicle may output a visual indication indicating a fault of the sensor using its output device. When an object located outside the specified distance is sensed by the sensor, the vehicle may output a visual indication indicating the sensing of the object using the output device.

Referring to FIG. 5, the vehicle may display information associated with the vehicle on its display. The vehicle may display an indication indicating whether a rear sensor of the vehicle operates normally. For example, when only an object located within a specified distance is sensed by the rear sensor, that is, when an object located outside the specified distance is not sensed, the vehicle may display a first color indication 510, as a visual indication indicating a fault of the sensor, under a vehicle icon.

For example, when the object located outside the specified distance is sensed, the vehicle may display a second color indication 520, as a visual indication indicating a normal operation of the sensor, under a vehicle icon.

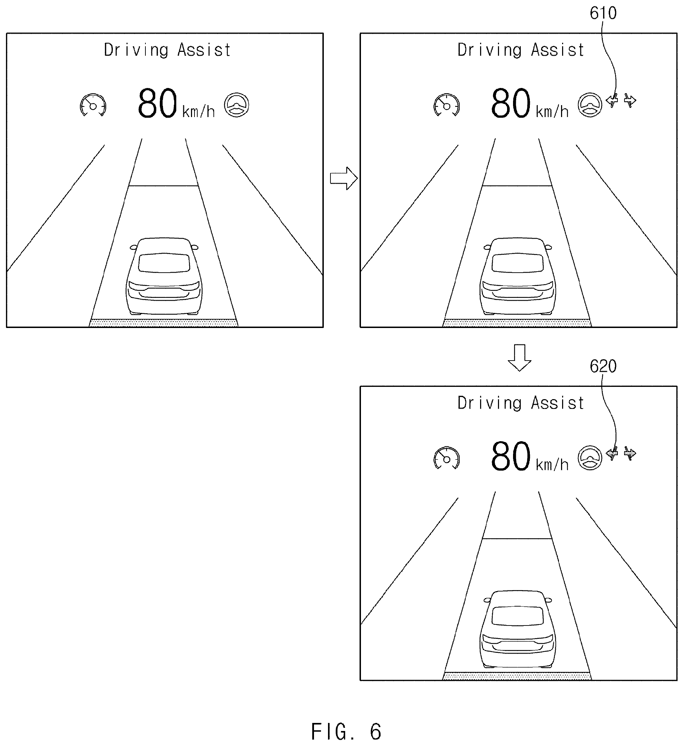

FIG. 6 illustrates an exemplary operation of an apparatus for controlling a lane change in a vehicle according to a form of the present invention.

The vehicle may output a visual indication indicating an off state, a stand-by state, or an on state of a system for lane change using its output device.

Referring to FIG. 6, the vehicle may display information associated with the vehicle on its display. The vehicle may display an indication indicating a state of the lane change system on the display. For example, when the lane change system is in the off state, the vehicle may fail to display a related icon on the display.

When the lane change system switches from the off state to the stand-by state, the vehicle may display a first color icon 610 as a visual indication indicating the stand-by state of the lane change system.

When the lane change system switches from the stand-by state to the on state, the vehicle may display a second color icon 620 as a visual indication indicating the on state of the lane change system. Only when the lane change system is in the on state, the vehicle may perform lane change control depending on an input of its driver.

The driver may determine whether a sensor operates normally through the visual indication and may identify the state of the lane change system. Furthermore, the driver may visually identify whether the sensor operates normally to easily determine the reason why the lane change system is not enabled.

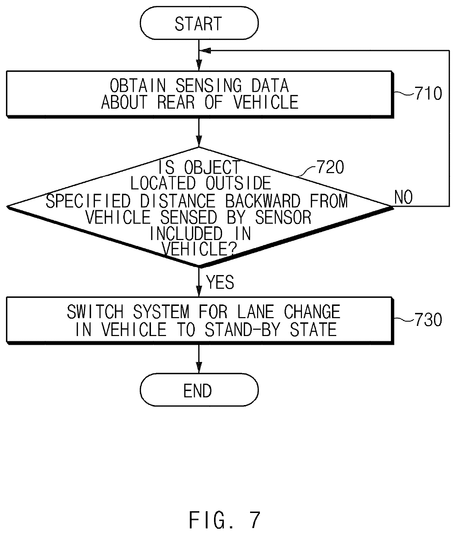

FIG. 7 is a flowchart illustrating a method for controlling a lane change in a vehicle according to a form of the present invention.

Hereinafter, it is assumed that a vehicle including an apparatus 100 for controlling a lane change in FIG. 1 performs a process of FIG. 7. Furthermore, in a description of FIG. 7, an operation described as being performed by the vehicle may be understood as being controlled by a control circuit 140 of the apparatus 100 for controlling the lane change.

Referring to FIG. 7, in operation 710, the vehicle may obtain sensing data about the rear of the vehicle. When the vehicle is started, it may collect sensing data using its sensor.

In operation 720, the vehicle may determine whether an object located outside a specified distance backward from the vehicle is sensed by the sensor in the vehicle. To verify performance of the sensor, the vehicle may determine whether the object located outside the specified distance capable of providing the safety of a lane change is sensed. When the object located outside the specified distance is not sensed, the vehicle may obtain sensing data until the object is sensed and may determine whether the sensor operates normally.

When the object located outside the specified distance is sensed, in operation 730, the vehicle may switch the system for lane change in the vehicle to a stand-by state. When the system for lane change switches to the stand-by state, the vehicle may switch the system for lane change to an on state depending on an operation of its driver and may perform a lane change depending on an operation of the driver in the on state.

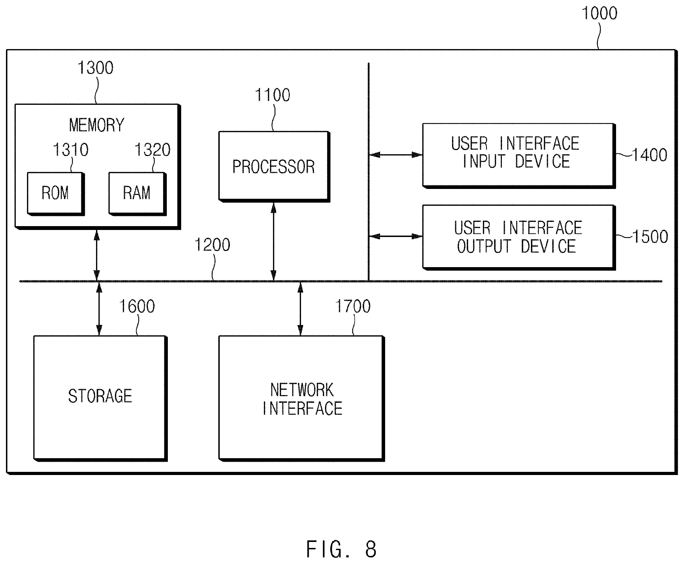

FIG. 8 is a block diagram illustrating a configuration of a computing system according to a form of the present invention.

Referring to FIG. 8, a computing system 1000 may include at least one processor 1100, a memory 1300, a user interface input device 1400, a user interface output device 1500, a storage 1600, and a network interface 1700, which are connected with each other via a bus 1200.

The processor 1100 may be a central processing unit (CPU) or a semiconductor device for performing processing of instructions stored in the memory 1300 and/or the storage 1600. Each of the memory 1300 and the storage 1600 may include various types of volatile or non-volatile storage media. For example, the memory 1300 may include a read only memory (ROM) and a random access memory (RAM).

Thus, the operations of the methods or algorithms described in connection with the forms disclosed in the specification may be directly implemented with a hardware module, a software module, or combinations thereof, executed by the processor 1100. The software module may reside on a storage medium (i.e., the memory 1300 and/or the storage 1600) such as a RAM, a flash memory, a ROM, an erasable and programmable ROM (EPROM), an electrically EPROM (EEPROM), a register, a hard disc, a removable disc, or a compact disc-ROM (CD-ROM). An exemplary storage medium may be coupled to the processor 1100. The processor 1100 may read out information from the storage medium and may write information in the storage medium. Alternatively, the storage medium may be integrated with the processor 1100. The processor and storage medium may reside in an application specific integrated circuit (ASIC). The ASIC may reside in a user terminal. Alternatively, the processor and storage medium may reside as a separate component of the user terminal.

The apparatus for controlling the lane change in the vehicle according to a form of the present invention may provide the safety of the driver of the vehicle by switching the lane change system to the stand-by state when the object located outside the specified distance backward from the vehicle is sensed.

In addition, various effects directly or indirectly ascertained through the present invention may be provided.

While this present invention has been described in connection with what is presently considered to be practical exemplary forms, it is to be understood that the present invention is not limited to the disclosed forms, but, on the contrary, it is intended to cover various modifications and equivalent arrangements according to the appended claims.

## Claims

1. An apparatus (100) for controlling a lane change in a vehicle, the apparatus (100) comprising:
a sensor (110) configured to sense an object located behind the vehicle; and
a control circuit (140) configured to be electrically connected with the sensor (110),
wherein the control circuit (140) is configured to:
receive sensing data from the sensor (110);
determine that the sensor (110) operates normally, when an object located outside a specified distance backward from the vehicle is sensed;
determine that the sensor (110) does not operate normally, when only an object located within the specified distance backward from the vehicle is sensed;
switch a system for lane change in the vehicle to a stand-by state, when the normal operation of the sensor (110) is recognized, and
maintain the system for lane change in an off state, when abnormal operation of the sensor is recognized,
wherein the specified distance is capable of providing the safety of the lane change.

2. The apparatus (100) of claim 1, wherein the control circuit (140) is configured to:
receive the sensing data from the sensor (110), when the vehicle is started.

3. The apparatus (100) of claim 1 or 2, wherein the control circuit (140) is configured to:
switch the system for lane change to the stand-by state, when data about the object located outside the specified distance is included in the sensing data.

4. The apparatus (100) of claim 1 to 3, wherein the control circuit (140) is configured to:
switch the system for lane change to the stand-by state, when the object located outside the specified distance is sensed by the sensor (110) and when the vehicle is located within a specified operation section of the system for lane change.

5. The apparatus (100) of claim 1 to 4, wherein the control circuit (140) is configured to:
switch the system for lane change from an off state to the stand-by state, when the object located outside the specified distance is sensed by the sensor (110).

6. The apparatus (100) of claim 1 to 5, wherein the control circuit (140) is configured to:
switch the system for lane change to an on state, when approval of a driver of the vehicle is received in the stand-by state.

7. The apparatus (100) of claim 1 to 6, further comprising:
an output device (130),
wherein the control circuit (140) is configured to:
output a visual indication indicating an off state, the stand-by state or an on state of the system for lane change using the output device (130).

8. The apparatus (100) of claim 1 to 7, wherein the control circuit (140) is configured to:
maintain an off state of the system for lane change, when only the object located within the specified distance is sensed by the sensor (110).

9. The apparatus (100) of claim 1 to 6, further comprising:
an output device (130),
wherein the control circuit (140) is configured to:
output a visual indication indicating the sensing of the object using the output device (130), when the object located outside the specified distance is sensed by the sensor (110).

10. The apparatus (100) of claim 1 to 6, further comprising:
an output device (130),
wherein the control circuit (140) is configured to:
output a visual indication indicating a fault of the sensor (110) using the output device (130), when only the object located within the specified distance is sensed.

11. A method for controlling a lane change in a vehicle, the method comprising steps of:
obtaining sensing data about a rear of the vehicle;
determine that the sensor (110) operates normally, when an object located outside a specified distance backward from the vehicle is sensed;
determine that the sensor (110) does not operate normally, when only an object located within the specified distance backward from the vehicle is sensed;
switching a system for lane change in the vehicle to a stand-by state, when the normal operation of the sensor (110) is recognized, and
maintain the system for lane change in an off state, when abnormal operation of the sensor is recognized,
wherein the specified distance is capable of providing the safety of the lane change.

12. The method of claim 11, wherein the method comprises a step of:
switching the system for lane change to the stand-by state, when the object located outside the specified distance is sensed by the sensor (110) and when the vehicle is located within a specified operation section of the system for lane change.

## Patentansprüche

1. Vorrichtung (100) zur Steuerung des Spurwechsels in einem Fahrzeug, wobei die Vorrichtung (100) Folgendes umfasst:
einen Sensor (110), der konfiguriert ist zum Erfassen eines Objekts, das sich hinter dem Fahrzeug befindet; und
eine Steuerschaltung (140), die so konfiguriert ist, dass sie elektrisch mit dem Sensor (110) verbunden ist,
wobei die Steuerschaltung (140) konfiguriert ist zu Folgendem:
Empfangen von Erfassungsdaten vom Sensor (110);
Bestimmen, dass der Sensor (110) normal funktioniert, wenn ein Objekt erfasst wird, das sich außerhalb eines festgelegten Abstands hinter dem Fahrzeug befindet;
Bestimmen, dass der Sensor (110) nicht normal funktioniert, wenn nur ein Objekt erfasst wird, das sich innerhalb des festgelegten Abstands hinter dem Fahrzeug befindet;
Schalten eines Systems für den Spurwechsel im Fahrzeug in einen Standby-Zustand, wenn der ordnungsgemäße Betrieb des Sensors (110) erkannt wird, und
Beibehalten des Systems für den Spurwechsel im Aus-Zustand, wenn ein nicht ordnungsgemäßer Betrieb des Sensors erkannt wird,
wobei der festgelegte Abstand es ermöglicht, die Sicherheit des Spurwechsels zu gewährleisten.

2. Vorrichtung (100) nach Anspruch 1, wobei die Steuerschaltung (140) konfiguriert ist zu Folgendem:
Empfangen von Erfassungsdaten vom Sensor (110), wenn das Fahrzeug gestartet wird.

3. Vorrichtung (100) nach Anspruch 1 oder 2, wobei die Steuerschaltung (140) konfiguriert ist zu Folgendem:
Schalten des Systems für den Spurwechsel in den Standby-Zustand, wenn Daten über das außerhalb des festgelegten Abstands befindliche Objekt in den Erfassungsdaten eingeschlossen sind.

4. Vorrichtung (100) nach Anspruch 1 bis 3, wobei die Steuerschaltung (140) konfiguriert ist zu Folgendem:
Schalten des Systems für den Spurwechsel in den Standby-Zustand, wenn das außerhalb des festgelegten Abstands befindliche Objekt vom Sensor (110) erfasst wird und wenn das Fahrzeug sich innerhalb eines festgelegten Betriebsabschnitts des Systems für den Spurwechsel befindet.

5. Vorrichtung (100) nach Anspruch 1 bis 4, wobei die Steuerschaltung (140) konfiguriert ist zu Folgendem:
Schalten des Systems für den Spurwechsel von einem Aus-Zustand in den Standby-Zustand, wenn das außerhalb des festgelegten Abstands befindliche Objekt vom Sensor (110) erfasst wird.

6. Vorrichtung (100) nach Anspruch 1 bis 5, wobei die Steuerschaltung (140) konfiguriert ist zu Folgendem:
Schalten des Systems für den Spurwechsel in den Ein-Zustand, wenn eine Zustimmung eines Fahrers des Fahrzeugs im Standby-Zustand erhalten wird.

7. Vorrichtung (100) nach Anspruch 1 bis 6, weiter umfassend:
eine Ausgabevorrichtung (130),
wobei die Steuerschaltung (140) konfiguriert ist zu Folgendem:
Ausgeben einer visuellen Anzeige, die einen Aus-Zustand, den Standby-Zustand oder einen Ein-Zustand des Systems für den Spurwechsel unter Verwendung der Ausgabevorrichtung (130) anzeigt.

8. Vorrichtung (100) nach Anspruch 1 bis 7, wobei die Steuerschaltung (140) konfiguriert ist zu Folgendem:
Beibehalten eines Aus-Zustands des Systems für den Spurwechsel, wenn nur das innerhalb des festgelegten Abstands befindliche Objekt vom Sensor (110) erfasst wird.

9. Vorrichtung (100) nach Anspruch 1 bis 6, weiter umfassend:
eine Ausgabevorrichtung (130),
wobei die Steuerschaltung (140) konfiguriert ist zu Folgendem:
Ausgeben einer visuellen Anzeige, die das Erfassen des Objektes unter Verwendung der Ausgabevorrichtung (130) anzeigt, wenn das außerhalb des festgelegten Abstands befindliche Objekt vom Sensor (110) erfasst wird.

10. Vorrichtung (100) nach Anspruch 1 bis 6, weiter umfassend:
eine Ausgabevorrichtung (130),
wobei die Steuerschaltung (140) konfiguriert ist zu Folgendem:
Ausgeben einer visuellen Anzeige, die einen Fehler des Sensors (110) unter Verwendung der Ausgabevorrichtung (130) anzeigt, wenn nur das innerhalb des festgelegten Abstands befindliche Objekt erfasst wird.

11. Ein Verfahren zur Steuerung des Spurwechsels in einem Fahrzeug, wobei das Verfahren folgende Schritte umfasst:
Erhalten von Erfassungsdaten über den hinteren Fahrzeugbereich;
Bestimmen, dass der Sensor (110) normal funktioniert, wenn ein Objekt erfasst wird, das sich außerhalb eines festgelegten Abstands hinter dem Fahrzeug befindet;
Bestimmen, dass der Sensor (110) nicht normal funktioniert, wenn nur ein Objekt erfasst wird, das sich innerhalb des festgelegten Abstands hinter dem Fahrzeug befindet;
Schalten des Systems für den Spurwechsel im Fahrzeug in den Standby-Zustand, wenn der ordnungsgemäße Betrieb des Sensors (110) erkannt wird, und
Beibehalten des Systems für den Spurwechsel im Aus-Zustand, wenn ein nicht ordnungsgemäßer Betrieb des Sensors erkannt wird,
wobei der festgelegte Abstand es ermöglicht, die Sicherheit des Spurwechsels zu gewährleisten.

12. Verfahren nach Anspruch 11, wobei das Verfahren den folgenden Schritt umfasst:
Schalten des Systems für den Spurwechsel in den Standby-Zustand, wenn das außerhalb des festgelegten Abstands befindliche Objekt vom Sensor (110) erfasst wird und wenn das Fahrzeug sich innerhalb eines festgelegten Betriebsabschnitts des Systems für den Spurwechsel befindet.

## Revendications

1. Appareil (100) de commande d'un changement de voie dans un véhicule, l'appareil (100) comprenant :
un capteur (110) configuré pour détecter un objet situé derrière le véhicule ; et
un circuit de commande (140) configuré pour être connecté électriquement au capteur (110),
dans lequel le circuit de commande (140) est configuré pour :
recevoir des données de détection provenant du capteur (110) ;
déterminer que le capteur (110) fonctionne normalement, lorsqu'un objet situé à l'extérieur d'une distance spécifiée derrière le véhicule est détecté ;
déterminer que le capteur (110) ne fonctionne pas normalement, lorsque seul un objet situé à l'intérieur de la distance spécifiée derrière le véhicule est détecté ;
faire passer un système de changement de voie dans le véhicule à un état de veille, lorsque le fonctionnement normal du capteur (110) est reconnu, et
maintenir le système de changement de voie dans un état désactivé, lorsqu'un fonctionnement anormal du capteur est reconnu,
dans lequel la distance spécifiée est en mesure de fournir la sécurité du changement de voie.

2. Appareil (100) selon la revendication 1, dans lequel le circuit de commande (140) est configuré pour :
recevoir les données de détection provenant du capteur (110), lorsque le véhicule est démarré.

3. Appareil (100) selon la revendication 1 ou la revendication 2, dans lequel le circuit de commande (140) est configuré pour :
faire passer le système de changement de voie à l'état de veille, lorsque des données concernant l'objet situé à l'extérieur de la distance spécifiée sont incluses dans les données de détection.

4. Appareil (100) selon l'une des revendications 1 à 3, dans lequel le circuit de commande (140) est configuré pour :
faire passer le système de changement de voie à l'état de veille, lorsque l'objet situé à l'extérieur de la distance spécifiée est détecté par le capteur (110) et lorsque le véhicule est situé à l'intérieur d'une section de fonctionnement spécifiée du système de changement de voie.

5. Appareil (100) selon l'une des revendications 1 à 4, dans lequel le circuit de commande (140) est configuré pour :
faire passer le système de changement de voie d'un état désactivé à l'état de veille, lorsque l'objet situé à l'extérieur de la distance spécifiée est détecté par le capteur (110).

6. Appareil (100) selon l'une des revendications 1 à 5, dans lequel le circuit de commande (140) est configuré pour :
faire passer le système de changement de voie à un état activé, lorsque l'approbation d'un conducteur du véhicule est reçue dans l'état de veille.

7. Appareil (100) selon l'une des revendications 1 à 6, comprenant en outre :
un dispositif de sortie (130),
dans lequel le circuit de commande (140) est configuré pour :
produire une indication visuelle indiquant un état désactivé, l'état de veille ou un état activé du système de changement de voie en utilisant le dispositif de sortie (130).

8. Appareil (100) selon l'une des revendications 1 à 7, dans lequel le circuit de commande (140) est configuré pour :
maintenir un état désactivé du système de changement de voie, lorsque seul l'objet situé à l'intérieur de la distance spécifiée est détecté par le capteur (110).

9. Appareil (100) selon l'une des revendications 1 à 6, comprenant en outre :
un dispositif de sortie (130),
dans lequel le circuit de commande (140) est configuré pour :
délivrer une indication visuelle indiquant la détection de l'objet en utilisant le dispositif de sortie (130), lorsque l'objet situé à l'extérieur de la distance spécifiée est détecté par le capteur (110).

10. Appareil (100) selon l'une des revendications 1 à 6, comprenant en outre :
un dispositif de sortie (130),
dans lequel le circuit de commande (140) est configuré pour :
délivrer une indication visuelle indiquant un défaut du capteur (110) en utilisant le dispositif de sortie (130), lorsque seul l'objet situé à l'intérieur de la distance spécifiée est détecté.

11. Procédé de commande d'un changement de voie dans un véhicule, le procédé comprenant les étapes :
d'obtention de données de détection concernant un arrière du véhicule ;
de détermination que le capteur (110) fonctionne normalement, lorsqu'un objet situé à l'extérieur d'une distance spécifiée vers l'arrière à partir du véhicule est détecté ;
de détermination que le capteur (110) ne fonctionne pas normalement, lorsque seul un objet situé à l'intérieur de la distance spécifiée vers l'arrière à partir du véhicule est détecté ;
de passage d'un système de changement de voie dans le véhicule à un état de veille, lorsque le fonctionnement normal du capteur (110) est reconnu, et
de maintien du système de changement de voie dans un état désactivé, lorsqu'un fonctionnement anormal du capteur est reconnu,
dans lequel la distance spécifiée est en mesure d'assurer la sécurité du changement de voie.

12. Procédé selon la revendication 11, dans lequel le procédé comprend une étape de :
passage du système de changement de voie à l'état de veille, lorsque l'objet situé à l'extérieur de la distance spécifiée est détecté par le capteur (110) et lorsque le véhicule est situé à l'intérieur d'une section de fonctionnement spécifiée du système de changement de voie.
